Europäisches Patentamt

European Patent Office

Office européen des brevets

(19)

(11) Numéro de publication : **0 489 901 B1**

(12) **FASCICULE DE BREVET EUROPEEN**

(45) Date de publication du fascicule du brevet :
**21.09.94 Bulletin 94/38**

(51) Int. Cl.⁵ : **G01B 11/24,** G03B 21/00

(21) Numéro de dépôt : **91912981.7**

(22) Date de dépôt : **02.07.91**

(86) Numéro de dépôt international :
**PCT/FR91/00529**

(87) Numéro de publication internationale :
**WO 92/01206 23.01.92 Gazette 92/03**

(54) **APPAREIL POUR LA DETERMINATION DE LA FORME TRIDIMENSIONNELLE D'UN OBJET PAR VOIE OPTIQUE SANS CONTACT.**

(30) Priorité : **03.07.90 FR 9008368**

(43) Date de publication de la demande :
**17.06.92 Bulletin 92/25**

(45) Mention de la délivrance du brevet :
**21.09.94 Bulletin 94/38**

(84) Etats contractants désignés :
**AT BE CH DE DK ES FR GB GR IT LI LU NL SE**

(56) Documents cités :
**EP-A- 0 288 983
EP-A- 0 300 164
EP-A- 0 313 193
EP-A- 0 379 079
US-A- 4 488 172**

(73) Titulaire : **BERTIN & CIE
Zone Industrielle
Boîte postale 3
F-78373 Plaisir Cédex (FR)**

(72) Inventeur : **MILLET, Jocelyn
20, rue des Bougainvilliers
F-84120 Pertuis (FR)**
Inventeur : **GEORGEL, Jean-Claude
108, rue Alphonse-Daudet
F-13140 Lambesc (FR)**

(74) Mandataire : **Ramey, Daniel et al
Cabinet Ores
6 Avenue de Messine
F-75008 Paris (FR)**

EP 0 489 901 B1

## Description

L'invention concerne un appareil pour la détermination de la forme tridimensionnelle d'un objet par voie optique sans contact, cet appareil comprenant des moyens de projection sur l'objet de l'image d'une mire comportant des franges ou lignes à variation spatiale sinusoïdale d'intensité lumineuse.

Le principe de la détermination de la forme tridimensionnelle d'un objet par projection sur l'objet d'un champ de franges rectilignes à variation spatiale sinusoïdale d'intensité lumineuse, formation d'une image de l'objet sur des photodétecteurs et mesure des phases des signaux des photodétecteurs, est décrit par exemple dans le Brevet Européen EP 0.182.469. La mise en oeuvre de ce principe conduit à projeter successivement sur l'objet, au moyen d'une première mire, n champs de franges déphasés de $2\pi/n$, de l'un au suivant, puis au moyen d'une seconde mire, n champs de franges ayant un pas différent et qui sont successivement déphasés de $2\pi/n$, pour lever une indétermination de $2k\pi$, k étant un nombre entier, sur la mesure de phase obtenue avec la première mire.

De façon connue, le champ de franges rectilignes peut se présenter sous forme d'un film inversible du type diapositive sur lequel est formée une mire de lignes parallèles à variation sinusoïdale de transparence dans une direction perpendiculaire à celle des lignes. On prévoit des moyens de déplacement transversal de cette mire sur n distances équivalentes à des déphasages de $2\pi/n$ et des moyens de changement de mire, pour lever l'indétermination de $2k\pi$ sur la mesure de phase. Les mesures doivent être réalisées dans un intervalle de temps compatible avec l'application envisagée de ce principe et qui peut être relativement très court dans certaines applications. Les moyens précités de déplacement et de changement de mire doivent donc être précis, rapides et fiables, autant que possible.

Par les documents US-A-4 488 172 et EP-A-379 079 demande interférente publiée le 25.07.90, on connaît des systèmes de projection de deux mires de pas différents sur un objet dont on veut déterminer la forme, les deux mires étant portées ou formées sur une même plaque mobile ou sur un même disque rotatif associé à des moyens motorisés de déplacement pas à pas. Ces systèmes connus ne permettent pas un déplacement et un changement de mire suffisamment rapides et précis.

L'invention a pour objet un appareil du type précité, qui répond à ces conditions de précision, de rapidité et de fiabilité.

Elle propose un appareil pour la détermination de la forme tridimensionnelle d'un objet par voie optique sans contact, comprenant des moyens de projection sur l'objet de l'image d'une mire comportant des franges ou lignes à variation spatiale sinusoïdale d'intensité lumineuse, qui sont formées par exemple sur un film inversible du type diapositive, des moyens de déplacement de la mire dans une direction perpendiculaire à l'axe optique des moyens de projection et à la direction des franges ou lignes de la mire, un support mobile portant au moins deux mires à franges ou lignes de pas différents, et des moyens moteurs d'entraînement dudit support en mouvement alternatif discontinu pour centrer chaque mire successivement sur l'axe optique des moyens de projection, caractérisé en ce que le support mobile est guidé en translation dans une direction perpendiculaire à l'axe optique et parallèle à la direction des franges ou lignes des mires et en ce que chaque mire est reliée au support mobile par deux lames parallèles élastiquement déformables constituant des moyens de guidage et de rappel sollicitant la mire dans une direction opposée à la direction d'action des moyens de déplacement, ces derniers étant du type à cames.

Cet agencement permet un changement très rapide des mires qu'il faut projeter sur l'objet dont on veut déterminer la forme, puisqu'il suffit de déplacer en translation un support vertical sur une course relativement faible. De plus, les moyens de montage des mires sur le support mobile constituent également des moyens de guidage et de rappel des mires, ce qui simplifie aussi bien la construction que le fonctionnement de l'appareil selon l'invention.

Selon encore une autre caractéristique de l'invention, les moyens précités à came comprennent des cames entraînées en rotation autour d'axes parallèles à l'axe optique par le même moyen moteur, chaque came agissant sur une mire associée.

Cette disposition contribue également à la rapidité des mesures.

De préférence, chaque came agit sur la mire associée par l'intermédiaire d'un culbuteur monté pivotant autour d'un axe parallèle à l'axe optique et associé à des moyens commandés de mise en service et hors service.

Ce culbuteur peut avoir une fonction démultiplicatrice qui permet d'augmenter la précision sur le déplacement de la mire associée, par rapport à la précision d'usinage de la came.

L'invention sera mieux comprise et d'autres caractéristiques, détails et avantages de celle-ci apparaitront plus clairement à la lecture de la description qui suit, faite à titre d'exemple en référence aux dessins annexés, dans lesquels :

la figure 1 illustre schématiquement le principe de la détermination de la forme tridimensionnelle d'un objet par projection d'un champ de franges rectilignes;

la figure 2 est une vue schématique en plan des moyens de déplacement et de changement de mire selon l'invention.

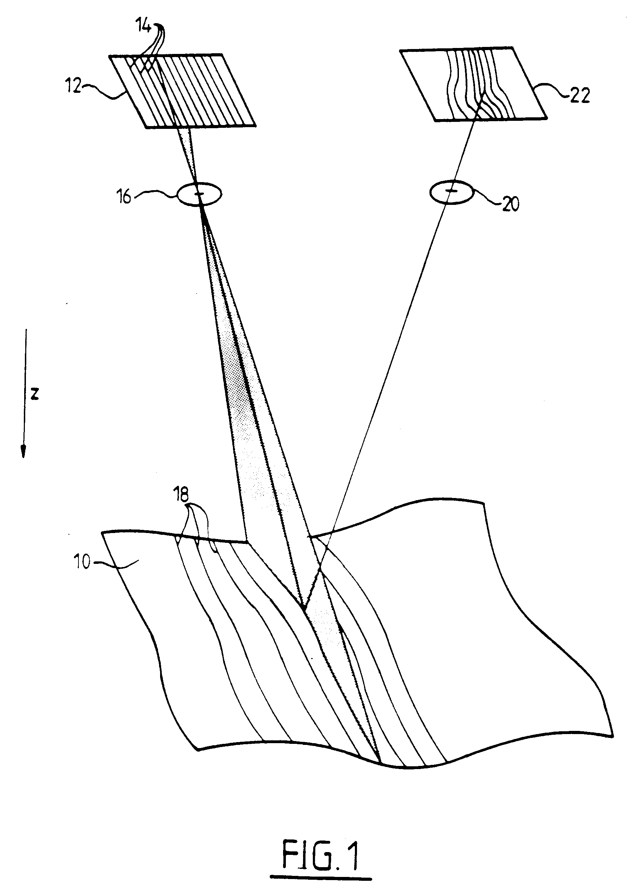

On se réfère d'abord à la figure 1, qui illustre schématiquement le principe sur lequel est basé la détermination de la forme tridimensionnelle d'un objet par analyse de la phase de l'image d'un signal lumineux projeté sur l'objet et présentant une variation spatiale sinusoïdale d'intensité lumineuse.

Dans cette figure, la référence 10 désigne la surface de l'objet dont on veut déterminer la forme, et sur laquelle on projette l'image d'une mire 12 à franges ou lignes parallèles 14 qui sont à variation spatiale sinusoïdale d'intensité lumineuse dans une direction perpendiculaire à leur propre direction.

De façon commode, cette mire est formée sur un film inversible du type diapositive, et on peut donc utiliser un projecteur de type classique représenté schématiquement par une optique 16 pour former l'image de cette mire sur la surface de l'objet 10. Lorsque cette surface n'est pas plane, les images 18 des lignes 14 de la mire ne sont plus rectilignes et parallèles, mais déformées par le relief de la surface de l'objet, leur déformation étant représentative du relief de cet objet.

Une optique 20 permet de former l'image de la surface de l'objet sur un ensemble 22 de photodétecteurs, par exemple du type CCD, qui sont associés à des moyens électroniques d'acquisition de signaux et à des moyens informatique de traitement de ces signaux. On peut par exemple utiliser pour cela une caméra vidéo CCD reliée à un micro-ordinateur.

Par analyse de la phase du signal lumineux capté par chaque photodétecteur de l'ensemble 22, on peut déterminer les cotes des points de la surface de l'objet 10 le long d'un axe z par rapport à un plan de référence. Pour cela, on est amené comme indiqué plus haut, à projeter sur la surface de l'objet 10 n champs de franges qui sont déphasés de $2\pi/n$, n étant souvent choisi égal à 4 pour obtenir en sortie des photodétecteurs, à des coefficients près, des signaux de la forme :

$$I_o = 1 + \cos \varphi$$
$$I_1 = 1 + \sin \varphi$$
$$I_2 = 1 - \cos \varphi$$
$$I_3 = 1 - \sin \varphi$$

On peut ainsi obtenir la phase modulo $2\pi$ du signal de chaque photodétecteur :

$$\varphi = \operatorname{arctg} \frac{I_1 - I_3}{I_o - I_2}$$

L'indétermination de $2k\pi$ sur la valeur de la phase peut être levée par projection sur la surface de l'objet d'un champ de franges ayant un pas différent (par exemple supérieur) de celui du champ de franges précédemment projeté. On est conduit pour cela à utiliser une deuxième mire à la place de la première.

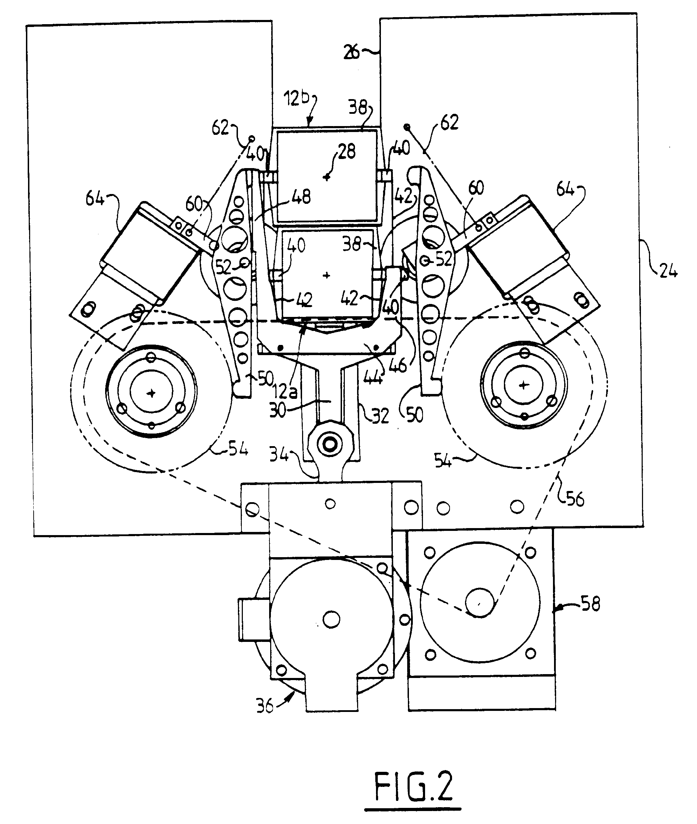

Les moyens de déplacement et de changement de mire selon l'invention sont représentés schématiquement en figure 2.

Ces moyens sont associés à un projecteur de diapositives d'un type classique, non représenté, et sont montés sur une platine 24 comportant une fente ou découpe 26 centrée sur l'axe optique 28 du projecteur qui est perpendiculaire au plan du dessin.

Dans l'exemple représenté, deux mires 12a, 12b sont montées l'une en dessous de l'autre sur un support mobile 30 guidé en translation verticale, perpendiculairement à l'axe optique 28, dans une glissière 32 fixée à la platine 24. L'extrémité inférieure du support mobile 30 est reliée par un système bielle-manivelle 34 à l'arbre de sortie d'un moteur électrique 36 monté sur la platine 24. Ce moteur électrique est du type pas à pas et est commandé pour déplacer le support mobile 30 en mouvement alternatif discontinu, permettant de centrer une mire, puis l'autre sur l'axe optique 28 du projecteur.

Les mires 12a, 12b comprennent chacune un cadre périphérique 38 de forme rectangulaire ou carrée dont les deux côtés verticaux présentent chacun, en leur milieu, un téton ou un doigt 40 orienté vers l'extérieur et formant une zone d'ancrage de l'extrémité supérieure d'une lame élastiquement déformable 42 dont l'extrémité inférieure est ancrée sur une barre transversale formant la base du support mobile 30. Chaque mire 12a, 12b est ainsi suspendue au support mobile 30 par deux lames parallèles élastiquement déformables 42 qui, par flexion, permettent le déplacement transversal de la mire dans une direction qui est perpendiculaire à l'axe optique 28 et perpendiculaire également à la direction verticale de déplacement du support mobile 30.

Une pièce en U 44 présentant deux bras parallèles 46, 48 de longueurs inégales, est fixée sur le support mobile 30 de telle sorte que ses bras 46, 48 viennent encadrer les mires 12a, 12b, le bras court 46 s'appliquant sur le côté droit de la mire inférieure 12a et empêchant un déplacement de celle-ci vers la droite sur le dessin, tandis que le bras long 48 prend appui sur le côté gauche de la mire supérieure 12b et empêche un déplacement transversal de celle-ci vers la gauche sur le dessin. Les appuis des bras 46, 48 sur les mires 12a, 12b respectivement sont prévus pour solliciter légèrement les lames de suspension 42 vers la gauche pour la mire 12a et vers la droite pour la mire 12b, et empêcher ainsi les vibrations transversales des mires et de leurs lames de suspension.

Par ailleurs, à chaque mire 12a, 12b sont associés des moyens de déplacement transversal qui comprennent essentiellement, dans l'exemple représenté, un culbuteur ou basculeur 50 monté pivotant sur la platine 24 autour d'un axe 52 parallèle à l'axe optique, et dont l'extrémité inférieure est destinée à être appliquée sur la périphérie d'une came 54 représentée en trait fantôme, tandis que son extrémité supérieure est destinée à s'appliquer sur un téton 40 de la mire associée 12a, 12b.

Les deux cames 54 sont entraînées en rotation dans le même sens et à la même vitesse angulaire par une courroie crantée 56 entraînée elle-même par l'arbre de sortie d'un moteur 58 monté sur la platine 24.

Des moyens sont avantageusement prévus pour mettre chaque culbuteur 50 en service et hors service et comprennent par exemple un levier 60 associé au culbuteur et monté sur l'axe de rotation 52, en étant relié par son extrémité libre à un ressort de traction 62 représenté schématiquement en trait d'axe. Un électro-aimant polarisé 64 monté sur la platine 24 permet en l'absence d'un courant d'excitation d'attirer le levier 60 à l'encontre de l'action du ressort 62, et de le faire tourner avec le culbuteur dans un sens qui écarte le culbuteur de la came 54 et du téton 40 de la mire associée. Dans cette position, la rotation de la came 54 n'est pas transmise à la mire associée 12a, 12b et l'extrémité supérieure du culbuteur est en outre écartée du téton 40 de la mire associée. Par contre, quand l'électro-aimant 64 est excité par un courant électrique, le ressort 62 fait pivoter le levier 60 dans le sens tendant à amener les extrémités du culbuteur 50 en appui sur la came 54 et sur le téton 40 de la mire associée.

Ces moyens de déplacement et de changement de mire fonctionnent de la façon suivante :

dans la position représentée au dessin, la mire supérieure 12b est centrée sur l'axe optique 28 du projecteur et peut donc être utilisée. L'électro-aimant 64 correspondant (celui de gauche sur le dessin) est excité et le culbuteur correspondant (celui de gauche) est en appui sur la came 54 associée et sur le téton de gauche 40 de la mire 12b. La rotation de la came 54 sur un tour complet se traduit par un mouvement transversal de la mire dans un sens et dans l'autre, en direction horizontale sur le dessin. Plus précisément, la mire supérieure 12b est déplacée vers la droite par le culbuteur 50 à partir d'une position initiale et est ramenée à cette position initiale par le rappel élastique exercé par les lames de suspension 42, les mouvements aller et retour de la mire étant symétriques pour doubler la cadence d'acquisition.

Le culbuteur 50 a une action démultiplicatrice qui permet d'augmenter la précision sur le déplacement de la mire associée, par rapport à la précision d'usinage de la came, en fonction de son rapport de levier entre la came et la mire.

La périphérie de la came 54, sur laquelle prend appui le culbuteur 50, peut être continue ou étagée. Chaque demi-périphérie de la came comprend 4 étages correspondant respectivement aux déphasages 0, $\pi/2$, $\pi$ et $3\pi/2$, ou bien une rampe continue faisant varier la phase de 0 à $2\pi$ de façon continue et uniforme. Dans les deux cas, la rotation de la came sur un demi-tour se traduit par un déplacement de la mire sur des distances correspondant à des déphasages de $\pi/2$, $\pi$ et $3\pi/2$ du champ de franges à partir d'une position initiale correspondant à un déphasage nul.

Lorsque les mesures nécessaires ont été réalisées lors de la projection de la mire 12b sur la surface de l'objet, l'électro-aimant correspondant 64 est désexcité, le culbuteur 50 de gauche est amené en position hors service par le levier 62, et le moteur 36 commande le déplacement vertical vers le haut du support mobile 30 pour amener la mire inférieure 12a sur l'axe optique 28 du projecteur. Par excitation de l'électro-aimant 64 de droite, le culbuteur 50 est amené en service, et transforme la rotation de la came associée 54 en déplacement transversal de la mire 12a.

A titre d'exemple, on indiquera que les mires 12a et 12b utilisées peuvent avoir des pas entre franges relativement très différents, la mire présentant le pas le plus important étant placée en position supérieure par rapport au support mobile, de façon à ce que son déplacement latéral par flexion des lames de suspension 42 puisse être plus important; les cames 54 sont entraînées à une vitesse de rotation qui est par exemple de l'ordre de deux tours par seconde, un tour correspondant à un déplacement aller-retour d'une mire, et le changement de mire par translation verticale du support mobile 30 s'effectue en quelques dixièmes de secondes. En conséquence, la durée d'acquisition des signaux nécessaires à la détermination de la forme tridimensionnelle d'un objet, par un appareil équipé des moyens de déplacement et de changement de mire selon l'invention, est de l'ordre de une à quelques secondes au maximum.

L'utilisation de cames pour déplacer les mires permet une précision du $\mu m$ sur un déplacement de l'ordre du mm ou du cm, ce qui serait impossible avec des moyens piézo-électriques ou électro-mécaniques.

Bien entendu, diverses variantes peuvent être apportées aux moyens qui ont été décrits et représentés :

- par exemple, les cadres 38 des mires peuvent être conçus pour que les cames 54 agissent directement sur les tétons 40, ce qui permet de ne pas utiliser de culbuteurs 50 ( on peut pour cela allonger les tétons 40 et placer les cames 54 au niveau de ces tétons);

- des mires en nombre supérieur à 2, et ayant toutes des pas différents, peuvent être montées sur le support mobile 30, qui est alors déplaçable entre un nombre de positions correspondant au nombre de mires pour amener chaque mire successivement sur l'axe optique du projecteur, chaque mire de pas supérieur permettant de lever l'indétermination de $2k\pi$ sur les mesures de phase réalisées au moyen de la mire de pas immédiatement inférieur;

- chaque came peut être à double action sur la mire associée pour la déplacer de façon positive dans un sens, puis dans l'autre, ce qui rend inutiles les moyens de rappel élastique.

## Revendications

1. Appareil pour la détermination de la forme tridimensionnelle d'un objet par voie optique sans contact, comprenant des moyens (16) de projection sur l'objet (10) de l'image d'une mire (12) comportant des franges ou lignes (14) à variation spatiale sinusoïdale d'intensité lumineuse qui sont formées par exemple sur un film inversible du type diapositive, des moyens (54) de déplacement de la mire dans une direction perpendiculaire à l'axe optique (28) des moyens de projection et à la direction des franges ou lignes de la mire, un support mobile (30) portant au moins deux mires (12a, 12b) à franges ou lignes de pas différents, et des moyens moteurs (34, 36) d'entraînement du support en mouvement alternatif discontinu pour centrer chaque mire successivement sur l'axe optique (28) des moyens de projection, le support mobile (30) étant guidé en translation dans une direction perpendiculaire à l'axe optique (28) et parallèle à la direction des franges ou lignes des mires et chaque mire étant reliée au support mobile (30) par deux lames parallèles (42) élastiquement déformables, constituant des moyens de guidage et de rappel sollicitant la mire dans une direction opposée à la direction d'action des moyens de déplacement (54), ces derniers étant du type à cames.

2. Appareil selon la revendication 1, caractérisé en ce que les moyens de déplacement des mires comprennent des cames (54) entraînées en rotation autour d'axes parallèles à l'axe optique (28) par le même moyen moteur (56, 58), chaque came agissant sur une mire associée (12a, 12b).

3. Appareil selon la revendication 2, caractérisé en ce que chaque came (54) agit sur la mire associée (12a, 12b) par l'intermédiaire d'un culbuteur (50) monté pivotant autour d'un axe (52) parallèle à l'axe optique (28) et associé à des moyens commandés (64) de mise en service et hors service.

4. Appareil selon la revendication 2 ou 3, caractérisé en ce que chaque mire (12a, 12b) comporte un cadre (38) muni d'un doigt latéral (40) sur lequel s'appuie la came (54) ou le culbuteur associé (50).

5. Appareil selon l'une des revendications précédentes, caractérisé en ce que le support mobile (30) porte deux butées fixes (46, 48) limitant chacune le déplacement d'une mire associée (12a, 12b) dans le sens opposé au sens de déplacement par la came associée (54), et sur laquelle ladite mire est appliquée élastiquement en position de repos.

6. Appareil selon l'une des revendications précédentes, caractérisé en ce que l'ensemble des moyens précités de déplacement et de changement des mires est monté sur une platine (24) comportant une découpe (26) centrée sur l'axe optique (28).

**Patentansprüche**

1. Vorrichtung zur kontaktlosen Bestimmung der Form eines dreidimensionalen Gegenstandes auf optischem Weg, die aufweist: Mittel (16) zur Projektion eines Testbildes (12) auf den Gegenstand (10), welches Streifen oder Linien (14) mit räumlich sinusförmig veränderlicher Lichtintensität aufweist, die zum Beispiel auf einem durchsichtigen Film wie einem Diapositiv ausgebildet sind, Mittel (54) zum Verschieben des Testbildes in einer Richtung normal zur optischen Achse (28) der Projektionsmittel und in Richtung der Streifen oder Linien des Testbildes, eine bewegliche Halterung (30), welche zumindest zwei Testbilder (12a, 12b) mit Streifen oder Linien in unterschiedlichen Abständen trägt, und Antriebsmittel (34, 36) für ein abwechselndes diskontinuierliches Bewegen der Halterung, um aufeinanderfolgend jedes Testbild an der optischen Achse (28) der Projektionsmittel zu zentrieren, wobei die bewegliche Halterung (30) in einer Richtung normal auf die optische Achse (28) und parallel zur Richtung der Streifen oder Linien des Testbildes verschieblich geführt ist und jedes Testbild mit der beweglichen Halterung (30) über zwei parallele, elastisch deformierbare Lamellen (42) verbunden ist, welche Führungs- und Rückstellmittel bilden, die das Testbild gegen die Wirkungsrichtung der Mittel zum Verschieben (54) belasten, welche nockenartig ausgebildet sind.

2. Vorrichtung nach Anspruch 1, **dadurch gekennzeichnet, daß** die Mittel zum Verschieben des Testbildes Nocken (54) aufweisen, welche durch dasselbe Motormittel (56, 58) um Achsen drehbar sind, die parallel zur optischen Achse (28) verlaufen, wobei jede Nocke an einem zugeordneten Testbild (12a,12b) angreift.

3. Vorrichtung nach Anspruch 2, **dadurch gekennzeichnet, daß** jede Nocke (54) unter Zwischenschaltung einer Kippvorrichtung (50) an dem zugeordneten Testbild angreift, die um eine Achse (52), welche parallel zur optischen Achse (28) verläuft, schwenkbar angeordnet und Steuermitteln (64) zum In- und Außer-Betrieb-Nehmen zugeordnet sind.

4. Vorrichtung nach Anspruch 2 oder 3, **dadurch gekennzeichnet, daß** jedes Testbild (12a, 12b) einen Rahmen (38) aufweist, der mit seitlichen Zapfen (40) versehen ist, an welchen die Nocke (54) oder die zugeordnete Kippvorrichtung (50) abgestützt ist.

5. Vorrichtung nach einem der vorigen Ansprüche, **dadurch gekennzeichnet, daß** die bewegliche Halterung (30) zwei feststehende Anschläge (46, 48) aufweist, von welchen jeder die Verschiebung eines zugeordneten Testbildes (12a, 12b) in Gegenrichtung der Verschiebung durch die zugeordneten Nocken (54) begrenzt und an welchen das Testbild in der Ruhestellung elastisch aufliegt.

6. Vorrichtung nach einem der vorigen Ansprüche, **dadurch gekennzeichnet, daß** die Anordnung der genannten Mittel zur Verschiebung und zur Veränderung der Testbilder auf einer Platte (24) angeordnet ist, welche über der optischen Achse (28) eine zentrale Ausschneidung (26) aufweist.

## Claims

1. Apparatus for determining the three-dimensional shape of an object optically and without contact, the apparatus comprising means (16) for projecting the image of a pattern (12) onto the object (10), the pattern comprising fringes or lines (14) of light at an intensity that varies sinusoidally in space, which patterns are formed, for example, on a slide type reversal film, means (54) for displacing the pattern in a direction perpendicular to the optical axis (28) of the projection means and to the direction in which the fringes or lines of the pattern extend, a moving support (30) having at least two patterns (12a, 12b) having fringes or lines at different pitches, and motor means (34, 36) for driving the support in discontinuous reciprocating motion so as to center each pattern in succession on the optical axis (28) of the projection means, the moving support (30) is guided in translation in a direction perpendicular to the optical axis (28) and parallel to the direction in which the fringes or lines of the patterns extend, and each pattern is connected to the moving support (30) by two resiliently deformable parallel blades (42) constituting guide means and return means urging the pattern in a direction that is opposite to the direction in which the displacement means (54) of the cam type operate.

2. Apparatus according to claim 1, characterized in that the means for displacing the pattern comprise cams (54) rotated about axes that are parallel to the optical axis (28) by the same motor means (56, 58), each cam acting on an associated one of the patterns (12a, 12b).

3. Apparatus according to claim 2, characterized in that each cam (54) acts on the associated pattern (12a, 12b) via a rocker (50) pivotally mounted about an axis (52) parallel to the optical axis (28) and associated with controlled means (64) for putting it into service and for taking it out of service.

4. Apparatus according to claim 2 or 3, characterized in that each pattern (12a 12b) includes a frame (38) provided with a lateral finger (40) on which the associated rocker (50) or cam (54) bears.

5. Apparatus according to any preceding claim, characterized in that the moving support (30) carries two fixed abutments (46, 48) each limiting the displacement of the associated pattern (12a, 12b) in the direction opposite to the direction in which it is displaced by the associated cam (54), and against which said pattern is resiliently pressed in the rest position.

6. Apparatus according to any preceding claim, characterized in that the above-specified pattern displacement and changing means are all mounted on a plate (24) including a cutout (26) centered on the optical axis (28).

FIG.1

FIG.2